# EUROPEAN PATENT SPECIFICATION

(11) **EP 2 286 757 B1**
(45) Date of publication and mention of the grant of the patent: **27.11.2013**
(21) Application number: 10009889.6
(22) Date of filing: 06.12.2004
(51) Int. Cl.: A61C 8/00

(54) **Implant**
Implantat
Implant

(30) Priority: 11.12.2003 SE 0303322
(43) Date of publication of application: 23.02.2011
(62) Divisional of application: 04820331.9
(73) Proprietor: Nobel Biocare Services AG, 8058 Zürich-Flughafen (CH)
(72) Inventor: Hall, Jan, 41680 Göteborg (SE)
(74) Representative: Roman Ekstedt, Måns

(56) References cited:
- WO-A1-03/005928
- WO-A1-03/015654
- WO-A1-03/030767
- WO-A1-03/047455
- WO-A2-01/49199
- DE-A1- 4 130 891
- US-A- 4 723 913
- US-A- 5 222 983
- US-A- 5 588 838
- US-A1- 2008 254 411

## Description

The present invention relates to an implant to be fitted in a hole in bone (jaw bone) with associated soft tissue. The implant comprises a portion that can be placed against the upper edge of the bone.

Such implants are already well known and are available on the market. The implant is generally provided with an outer thread by means of which it can be firmly screwed into the hole, which in turn can be threaded or unthreaded. In known implants, said portion bearing against the upper edge of the jaw bone can have a thread of general character or have ridges and depressions which extend, for example, in the vertical direction of the implant. The implant can comprise or support a spacer sleeve, prosthesis etc., which can be arranged with threads or surface-treated areas which can be placed against said upper edge of the jaw bone. These threads too are of a general character.

In the field of implants, a general problem is that of avoiding bone absorption, after a time, at the upper areas of the implant near its attachment components (spacers, prosthesis, etc.). Bone absorption means that said upper parts are exposed, which gives rise to poor esthetic results. This exposure also means that bacteria and organisms tending to cause inflammation can penetrate down to the lower parts of the implant. These disadvantages may in some cases lead to the implant having to be refitted. The object of the present invention is to solve this problem, inter alia.

Document US 4723 913 discloses an implant designed to be fitted in a hole formed in jaw bone and overlying soft tissue, and comprising an upper portion, wherein along its peripheral extent, said upper portion is provided with grooves forming rings. The grooves have a depth of 10 - 100 µm and a width in the range of 10- 120 µm.

The present invention uses the knowledge that certain specifically arranged grooves and/or recesses can provide for effective bone movement and ingrowth of bone into the actual groove and/or recesses. The bone movement and ingrowth stimulated by the groove and recesses gives rise to good integration between the implant part (titanium part) in question and the bone. Reference may be made in this respect to WO 97/05238 (Boyde) and to the patent application SE 02.03896-6 filed by the Applicant of the present patent application.

The object of the present invention is disclosed in the appended claims.

The features that can principally be regarded as defining the novel implant are, inter alia, that, along its peripheral extent, the portion is provided with grooves designed to stimulate bone movement and bone ingrowth and, by means of the bone ingrowth, to form a barrier against substantial or visible subsidence, around the portion, of the bone with overlying soft tissue wherein each groove has a cup-shaped cross section, having a depth of 50 - 100 µm, preferably ca. 70 µm, and a width in the range of 70 - 160 µm, preferably ca. 110 µm, at least one of said grooves forms a ring around said portion of the implant, the implant is provided with an outer thread by means of which the implant can be screwed into the hole, and the implant further comprises other grooves on another portion or other portions of the implant.

The portion comprises more than one groove extending along most, preferably all, of the circumference. One or more of said grooves can consist of an arc-shaped - or curved groove following a corresponding arc-shaped or curved bone (jaw bone). In a preferred embodiment, the groove comprises a cross section with the basic shape of a semi-circle, semi-oval, hyperbola, etc. The cross section has a depth of 50-100 µm, preferably ca. 70 µm, and a width in the range of 70 - 160 µm, preferably of ca. 110 µm. Said counteraction or prevention of subsidence means there is improved contact and retention of the soft tissue against said upper parts too. In a preferred embodiment, the portion is arranged with a groove which extends around the outer surface and which is located at the upper/outer parts of the portion, said groove extending substantially in a cross section arranged substantially at right angles to the longitudinal axis of the implant. Further developments of the inventive concept are set out in the attached dependent claims.

By means of what has been proposed above, an effective barrier can be obtained by means of bone growing into the groove. Subsidence of bone and soft tissue is effectively avoided in this way. Exposure of implant parts lying below the portion of the implant in question and/or the implant attachment component is effectively avoided, which affords considerable advantages for purely esthetic reasons. In addition, penetration of bacteria or organisms of a kind tending to cause inflammation is also avoided. The grooves can be obtained by turning, milling, engraving, etching, shot-peening, laser machining, etc.

A presently proposed embodiment of an implant having the features characteristic of the invention will be described below with reference to the attached drawings, in which:
- Figure 1: shows a vertical cross section through parts of a previously known implant fitted in a hole in bone in the form of jaw bone and soft tissue,
- Figure 2: shows a vertical cross section through parts of the novel implant,
- Figure 3: shows a vertical cross section through a second embodiment of the novel implant fitted in a jaw bone,
- Figure 4: shows a vertical cross section through an enlargement of a groove structure in an implant (partially shown) and jaw bone,
- Figure 5: shows a greater enlargement compared to Figure 4, illustrating the structure of a groove or recess used in conjunction with the implant according to Figures 2 and 3.

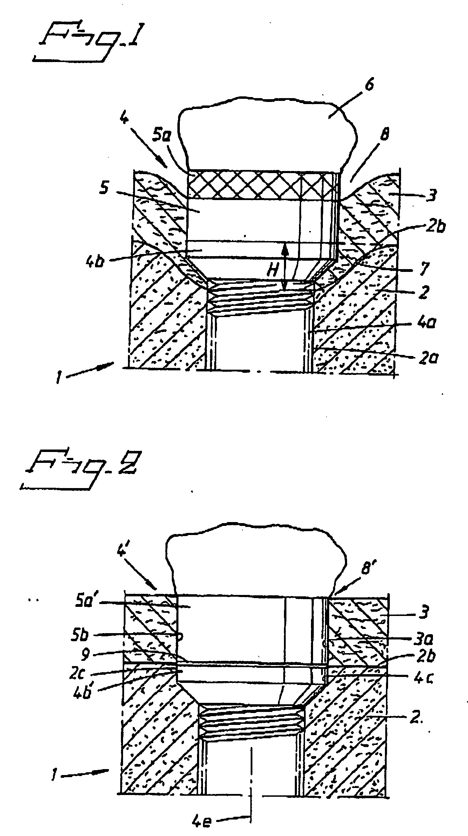

In Figure 1, reference number 1 generally designates parts of a jaw bone 2 and soft tissue 3 lying over the latter. An implant is generally indicated by reference number 4 and is screwed into the jaw bone in a hole 2a formed in the latter. The hole can be threaded or unthreaded before the implant is screwed in. The implant in turn comprises an outer thread 4a by means of which the implant can be screwed into the hole 2a. At its upper parts, the implant is provided with a portion 4b that can initially be placed against an upper edge 2b of the jaw bone 2. The implant can comprise or be connected to an attachment component 5, for example in the form of a spacer sleeve. The attachment component will in turn support a prosthesis 6 shown symbolically in Figure 1. Figure 1 illustrates a case where bone absorption 7 has occurred in the jaw bone, which bone absorption means that the soft tissue 3 subsides and that a conspicuous space 8 may form between in this case the upper parts 5a of the attachment component 5 and the bone. The space 8 can extend along much of the upper parts of the attachment components or implant. The space 8 in the present example thus has the effect that the upper part 5a is exposed, which is unacceptable from the esthetic point of view. In Figure 1, the extent of the bone absorption has been indicated by H, and this may often assume values of 1 mm or more.

In Figure 2, an implant according to the invention has been indicated by 4'. The implant in Figure 2 has a structure corresponding to the implant 4 in Figure 1. In accordance with the concept of the invention, the portion 4b' of the implant 4' has been provided with an upper groove 9 which extends in the peripheral direction of the portion 4b'. In the illustrative embodiment shown, the groove extends all round the periphery in a cross-sectional plane at right angles to the plane of the figure in Figure 2. The cross-sectional plane can be at right angles to the longitudinal axis 4e of the implant. The groove 9 is placed against the upper edge 2b of the bone 2. The outer surface of the portion has been indicated by 4c, and the opposite surface of the jaw bone by 2c. In the case illustrated according to Figure 2, the groove 9 is greatly enlarged for the sake of clarity. According to an embodiment which is not part of the present invention, the groove can in principle be replaced with a set of recesses arranged along all or most of the peripheral extent. The groove is of such a nature, according to the invention, that bone movement and bone ingrowth are stimulated by the groove or by the set of recesses themselves. The ingrowth of bone, which is described in more detail below, forms, at the top, a barrier preventing soft tissue 3 from subsiding in the event of bone absorption as shown in Figure 1. The barrier thus prevents the bone 2 from subsiding along the outer surface of the upper parts of the implant and being followed by the soft tissue 3 in the manner shown in Figure 1. By means of the invention, bone absorption is counteracted and only a small space 8' (not shown) can form between the soft tissue 3 and the upper parts 5a' of the attachment component 5. The soft tissue 3 can be allowed to bear with its inner surface 3a, in said hole, in contact against the outer surface 5b of the attachment component 5. The barrier thus prevents bone absorption, and the space 8' in which bacteria may possibly accumulate is considerably reduced or completely reduced in its extent and depth. The attachment component can be integrated with or applied to the implant.

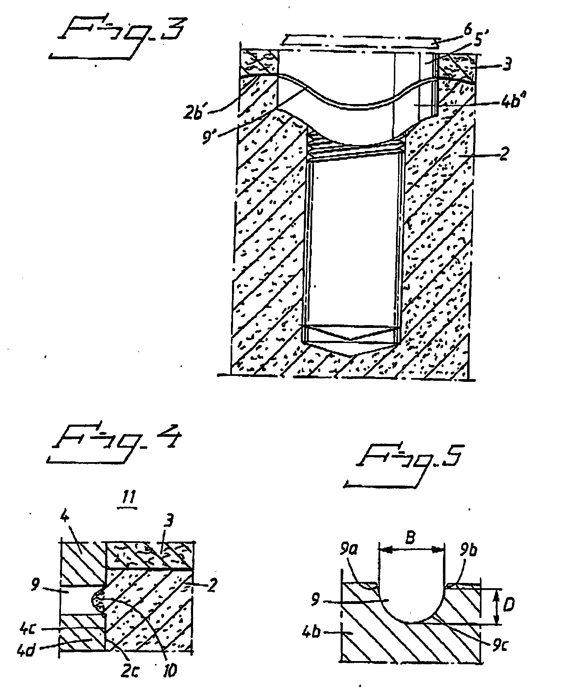

Figure 3 shows a second embodiment of the implant fitted in the jaw bone 2 and the soft tissue 3. The implant structure can be the same as indicated above, except that the portion 4b" is curved or arc-shaped so as to be able to follow a correspondingly curved or arc-shaped jaw bone edge 2b'. The portion supports or in this case includes an attachment component 5' which, at the bottom, adjoins the curved portion and, at the top, supports a structure or prosthesis 6. In this case too, a groove 9' is arranged at the upper parts of the portion. The groove 9' is placed opposite the upper edge 2b' of the jaw bone in a corresponding way to the groove 9 above. In this case too, the groove extends along all of the peripheral extent of the portion. According to an embodiment which is not part of the present invention the groove 9' can, in the same way as above, alternatively consist of a set of recesses arranged in a manner corresponding to the groove. Further grooves can be arranged substantially parallel to the groove 9' on the portion 4b".

Figure 4 shows the groove structure in more detail. The groove 9 here is of the type which increases bone movement and ingrowth of bone in the groove by virtue of its structure. In Figure 4, the ingrowth of bone is symbolized by 10. The implant or the implant part 4d below the groove has maintained its integration with the jaw bone 2, i.e. the surfaces 2c and 4c are closed tight. The oral cavity is here represented by 11.

In Figure 5, in accordance with the invention, the groove 9 is cup-shaped or semi-circular in cross section. As an alternative to the main semi-circular design, different variations of hyperbolic, elliptical or circular shapes are possible. Rectangular and square shapes can also be used. In these cases, however, it is important that the corners are rounded and are not sharp or provided with sharp edges. The groove or recess has been shown with transition parts 9a and 9b, and the actual cup shape or semi-circular shape by 9c. The width of the groove or of the recess is indicated by B and is measured at a position inside the bevels 9a and 9b. The depth of the groove is indicated by D. The width B is preferably ca. 110 µm and the depth D is preferably ca. 70 µm. As regards the extent of the groove in the circumferential direction, the expression "most of" means that at least 60% of the surface around the portion 4 will be provided with grooves. . The groove or grooves can be coordinated with correspondingly designed grooves and recesses on other parts of the implant.

The invention is not limited to the embodiment shown by way of example above, and instead it can be modified within the scope of the attached patent claims.

## Claims

1. An implant (1) designed to be fitted in a hole (2a) formed in jaw bone (2) and overlying soft tissue (3), and comprising a portion (4b') to be placed against the upper edge (2b) of the jaw bone, wherein along its peripheral extent, the portion (4b') is provided with grooves (9, 9') designed to stimulate bone movement and bone ingrowth (10) and, by means of said bone ingrowth, to form a barrier against substantial or visible subsidence, around the portion, of the bone (2) with overlying soft tissue (3), wherein
each groove (9, 9') has a cup-shaped cross section (9c), having a depth (D) of 50 - 100 µm, preferably ca. 70 µm, and a width (B) in the range of 70 - 160 µm, preferably ca. 110 µm,
at least one of said grooves forms a ring around said portion (4b') of the implant,
the implant is provided with an outer thread by means of which the implant can be screwed into the hole, and
the implant further comprises other grooves on another portion or other portions of the implant.

2. The implant as claimed in patent claim 1, **characterized in that** two or more grooves are substantially parallel grooves.

3. The implant as claimed in patent claim 1 or 2, **characterized in that** each groove (9, 9') consists of an arc-shaped or curved groove following a corresponding arc-shaped or curved jaw bone.

4. The implant as claimed in patent claim 1, 2 or 3, **characterized in that** each groove (9, 9') has a cross section of semi-circular shape, hyperbola shape or semi-elliptical shape, or a rectangular cross section with rounded corners.

5. The implant as claimed in any of patent claims 1-4, **characterized in that** said grooves includes a groove (9, 9') which extends all round the surface and which is located at the upper/outer parts of the portion (4b') and extends substantially in a cross section substantially at right angles to the longitudinal axis (4e) of the implant.

6. The implant as claimed in any of patent claims 1 - 5, **characterized in that** the grooves of said portion are coordinated with said other grooves.

7. The implant as claimed in any of patent claims 1 - 6, **characterized in that** said grooves each forms a closed track or ring around said portion (4b') of the implant.

8. The implant as claimed in any of patent claims 1 - 7, **characterized in that** said grooves each extends all round the periphery of said portion (4b') of the implant in a cross-sectional plane at right angles to the longitudinal axis (4e) of the implant.

9. The implant as claimed in any of patent claims 1 - 8, wherein said grooves (9, 9') have bevels (9a, 9b).

## Patentansprüche

1. Implantat (1), das konzipiert ist, in ein Loch (2a), das in einem Kieferknochen (2) und darüberliegendem Weichgewebe (3) gebildet ist, eingepasst zu werden, und einen Teil (4b') umfasst, der gegen den oberen Rand (2b) des Kieferknochens zu platzieren ist, wobei der Teil (4b') entlang seiner peripheren Erstreckung mit Rillen (9, 9') versehen ist, die konzipiert sind, Knochenbewegung und ein Einwachsen von Knochen (10) zu stimulieren und, durch das Einwachsen von Knochen, eine Barriere zu bilden gegen ein wesentliches oder sichtbares Absacken des Knochens (2) mit darüberliegendem Weichgewebe (3) um den Teil, wobei
jede Rille (9, 9') einen kelchförmigen Querschnitt (9c) aufweist mit einer Tiefe (D) von 50 - 100 µm, bevorzugt ca. 70 µm, und einer Breite (B) im Bereich von 70 - 160 µm, bevorzugt ca. 110 µm,
zumindest eine der Rillen einen Ring um den Teil (4b') des Implantats bildet, das Implantat mit einem Außengewinde versehen ist, durch das das Implantat in das Loch geschraubt werden kann, und
das Implantat weiterhin andere Rillen auf einem anderen Teil oder anderen Teilen des Implantats umfasst.

2. Implantat wie in Patentanspruch 1 beansprucht, **dadurch gekennzeichnet, dass** zwei oder mehr Rillen im Wesentlichen parallele Rillen sind.

3. Implantat wie in Patentanspruch 1 oder 2 beansprucht, **dadurch gekennzeichnet, dass** jede Rille (9, 9') aus einer bogenförmigen oder gekrümmten Rille besteht, die einem entsprechenden bogenförmigen oder gekrümmten Kieferknochen folgt.

4. Implantat wie in Patentanspruch 1, 2 oder 3 beansprucht, **dadurch gekennzeichnet, dass** jede Rille (9, 9') einen halbkreisförmigen, hyperbolischen oder halbelliptischen Querschnitt oder einen rechteckig Querschnitt mit abgerundeten Ecken aufweist.

5. Implantat wie in einem der Patentansprüche 1-4 beansprucht, **dadurch gekennzeichnet, dass** die Rillen eine Rille (9, 9') beinhalten, die sich um die gesamte Oberfläche erstreckt und die sich an den oberen/äußeren Bereichen des Teils (4b') befindet und sich im Wesentlichen in einem Querschnitt, der im Wesentlichen rechtwinklig zur Längsachse (4e) des Implantats ist, erstreckt.

6. Implantat wie in einem der Patentansprüche 1-5 beansprucht, **dadurch gekennzeichnet, dass** die Rillen des Teils mit den anderen Rillen abgestimmt sind.

7. Implantat wie in einem der Patentansprüche 1-6 beansprucht, **dadurch gekennzeichnet, dass** die Rillen jeweils einen geschlossenen Weg oder Ring um den Teil (4b') des Implantats bilden.

8. Implantat wie in einem der Patentansprüche 1-7 beansprucht, **dadurch gekennzeichnet, dass** die Rillen sich jeweils um die gesamte Peripherie des Teils (4b') des Implantats in einer Querschnittsebene, die rechtwinklig zur Längsachse (4e) des Implantats ist, erstrecken.

9. Implantat wie in einem der Patentansprüche 1-8 beansprucht, wobei die Rillen (9, 9') Abschrägungen (9a, 9b) aufweisen.

## Revendications

1. Implant (1) conçu pour être ajusté dans un trou (2a) formé dans une mâchoire (2) et un tissu mou sus-jacent (3), et comprenant une partie (4b') à placer contre le bord supérieur (2b) de la mâchoire, où, le long de son étendue périphérique, la partie (4b') est munie de rainures (9, 9') conçues pour stimuler le mouvement osseux et l'interposition osseuse (10) et, au moyen de ladite interposition osseuse, pour former une barrière contre une subsidence notable ou visible, autour de la partie, de l'os (2) avec un tissus mou sus-jacent (3), dans lequel
chaque rainure (9, 9') a une section transversale en forme de coupelle (9c), ayant une profondeur (D) allant de 50 à 100 µm, de préférence environ 70 µm, et une largeur (B) se trouvant dans la plage allant de 70 à 160 µm, de préférence environ 110 µm,
au moins l'une desdites rainures forme un anneau autour de ladite partie (4b') de l'implant,
l'implant est muni d'un filetage externe au moyen duquel l'implant peut être vissé dans le trou, et
l'implant comprend en outre d'autres rainures sur une autre partie ou d'autres parties de l'implant.

2. Implant tel que revendiqué dans la revendication 1, **caractérisé en ce que** deux rainures ou plus sont des rainures essentiellement parallèles.

3. Implant tel que revendiqué dans la revendication 1 ou 2, **caractérisé en ce que** chaque rainure (9, 9') est constituée d'une rainure en forme d'arc ou courbée suivant une mâchoire correspondante en forme d'arc ou courbée.

4. Implant tel que revendiqué dans la revendication 1, 2 ou 3, **caractérisé en ce que** chaque rainure (9, 9') a une section transversale ayant une forme semi-circulaire, une forme d'hyperbole ou une forme semi-elliptique, ou une section transversale rectangulaire avec des coins arrondis.

5. Implant tel que revendiqué dans l'une des revendications 1 à 4, **caractérisé en ce que** lesdites rainures comportent une rainure (9, 9') qui s'étend tout autour de la surface et qui est située au niveau des parties supérieures / externes de la partie (4b') et s'étend essentiellement dans une section transversale essentiellement à des angles droits par rapport à l'axe longitudinal (4e) de l'implant.

6. Implant tel que revendiqué dans l'une des revendications 1 à 5, **caractérisé en ce que** les rainures de ladite partie sont coordonnées avec lesdites autres rainures.

7. Implant tel que revendiqué dans l'une des revendications 1 à 6, **caractérisé en ce que** chacune desdites rainures forme une piste fermée ou un anneau autour de ladite partie (4b') de l'implant.

8. Implant tel que revendiqué dans l'une des revendications 1 à 7, **caractérisé en ce que** chacune desdites rainures s'étend tout autour de la périphérie de ladite partie (4b') de l'implant dans un plan de section transversale à des angles droits par rapport à l'axe longitudinal (4e) de l'implant.

9. Implant tel que revendiqué dans l'une des revendications 1 à 8, dans lequel lesdites rainures (9, 9') ont des biseaux (9a, 9b).
